# EUROPÄISCHE PATENTANMELDUNG

(11) **EP 0 870 480 A1**
(43) Veröffentlichungstag der Anmeldung: **14.10.1998**
(21) Anmeldenummer: 98106335.7
(22) Anmeldetag: 07.04.1998
(51) Int. Cl.: A61C 19/00, B08B 15/00

(54) **Absaugvorrichtung, insbesondere für Dental-Arbeitsplätz**

(30) Priorität: 08.04.1997 DE 19714481
(71) Anmelder: Zubler Gerätebau GmbH, 89081 Ulm-Jungingen (DE)
(72) Erfinder: Zubler, Kurt, 89233 Neu-Ulm (DE)
(74) Vertreter: Fiener, Josef

(57) **Zusammenfassung**

Zur effektiven Trennung von unterschiedlichen Arten von Bearbeitungsstaub, insbesondere Gips einerseits und Gold andererseits bei einer Absaugvorrichtung, insbesondere für Dental-Arbeitsplätze, wobei wenigstens eine Absaugstelle (2) an staubbelasteten Arbeitsplätzen (A) über je eine verschließbare Absaugleitung (3) an eine Absauganlage (5) angeschlossen ist, wird vorgeschlagen, daß für unterschiedliche, vom Arbeitsplatz (A) abzusaugende Materialien wenigstens zwei Filtereinheiten (5a und 5b) vorgesehen sind, an die die Absaugstelle (2) mit getrennten Absaugleitungen (3, 3') wechselweise ankoppelbar ist.

## Beschreibung

Die Erfindung betrifft eine Absaugvorrichtung, insbesondere für Dental-Arbeitsplätze, wobei wenigstens eine Absaugstelle an staubbelasteten Arbeitsplätzen über je eine verschließbare Absaugleitung an eine Absauganlage angeschlossen ist.

Derartige Absaugvorrichtungen dienen insbesondere in Dentallabors zum Absaugen von gesundheitsgefährdenden Stäuben, die bei der mechanischen Bearbeitung von Zahnersatz oder Gipsmodellen entstehen. Hierbei treten verschiedenartige Stäube wie Gipsstäube, Keramik- oder Metallstäube auf, wobei insbesondere von mineralischen Stäuben eine hohe Gesundheitsgefährdung wegen der Gefahr der Verursachung von Silikose ausgeht. Daher müssen insbesondere an den Zahntechniker-Arbeitsplätzen die Staubkonzentrationen unter sehr geringen, von den Berufsgenossenschaften vorgeschriebenen Grenzwerten bleiben. Diese Stäube werden bisher alle in einem Staubfilter abgesaugt, so daß der Filterinhalt häufig Sondermüll mit hohen Entsorgungskosten ist. Dabei geht auch ein hoher Anteil wertvoller Edelmetalle z. B. Gold verloren.

Zum Absaugen der gesundheitsgefährdenden Stäube werden die bisher vorhandenen Einzelplatzabsauganlagen zunehmend durch Zentral-Absaugvorrichtungen ersetzt, die in separaten Räumen installiert sind und die gereinigte Abluft nicht mehr in den Arbeitsraum zurückführen (Fortluftverfahren). Hierbei können an diese Zentralabsauganlage beispielsweise 30 Arbeitsplätze des Dentallabors angeschlossen sein, wobei von dem Zentralabsaugrohr eine entsprechende Vielzahl von Absaugleitungen zu den jeweiligen Arbeitsplätzen führt. Die Absaugstelle wird hierbei im allgemeinen von einer Absaugöffnung oder einem Trichter gebildet, vor dem die Schleif- oder Fräsbearbeitung des Dentalwerkstücks durchgeführt wird. Auch hierbei gelten die vorstehenden Nachteile, da das Zentralabsaugrohr in eine Filtereinheit mit einem Wechsel-Staubbehälter führt.

In Weiterentwicklung dieser Absauganlagen ist man dazu übergegangen, die Absaugleitungen von der Absaugstelle zu dem durchmessergrößeren Zentralabsaugrohr grundsätzlich zu verschließen und nur für den Fall, daß an dem jeweiligen Arbeitsplatz gerade eine Bearbeitung durchgeführt wird, die Absaugleitung auf Durchlaß zu stellen. Dies erfolgt beispielsweise durch eine elektrisch betätigte Schiebervorrichtung, wobei mit einem Stellmotor der Verschlußschieber in der Absaugleitung geöffnet bzw. geschlossen wird. Hierdurch wird im Gesamtsystem erreicht, daß beispielsweise von 30 Dentallabor-Arbeitsplätzen im allgemeinen Betrieb nur etwa ein Drittel der Absaugleitungen geöffnet ist, so daß zum Erreichen der gleichen Absaugleistungen ein leistungsschwächeres Absauggebläse ausreicht.

Um zu vermeiden, daß vom Zahntechniker vergessen wird, die Verschlußvorrichtung an der Absaugleitung nach Abschluß seiner Arbeit wieder zu schließen, wodurch sich der Leistungsbedarf für das Gesamtsystem erhöhen würde, ist in dem DE-GM 94 02 455 des Anmelders vorgeschlagen worden, daß zum Verschluß der jeweiligen Absaugleitung ein Schaltventil vorgesehen ist, das von einem Schalt-Steuerteil angesteuert ist, mit dem das Bearbeitungsgerät in Verbindung steht und die Absaugleitung mittels des Schaltventils unter Ansteuerung des Schalt-Steuerteils selbsttätig bei Inbetriebnahme des Bearbeitungsgerätes in Durchlaßstellung geschaltet wird (automat. Saugstellenöffner). Dadurch wird erreicht, daß die jeweilige Ansaugleitung des entsprechenden Arbeitsplatzes nur dann geöffnet wird, wenn tatsächlich Bearbeitungsstäube anfallen, die jedoch auch hier in einem gemeinsamen Sammelbehälter abgefiltert werden. Aufgrund der Vielzahl der Arbeitsplätze, wobei jedoch grundsätzlich pro Arbeitsplatz eine spezifische Materialbearbeitung (sog. Gipsplatz, Keramikplatz, Kunststoffplatz, Edelmetallplatz usw.) durchgeführt wird, ergibt sich als Filter-Rückstand ein Gemisch diverser Werkstoffe und Stäube (Gips, Metalle, Kunststoffe usw.). Für viele Anwendungsfälle wird jedoch zunehmend eine effektive Materialtrennung bei einfacher Bedienbarkeit gefordert.

Demzufolge liegt der Erfindung die Aufgabe zugrunde, eine Absaugvorrichtung, insbesondere für Dental-Arbeitsplätze anzugeben, mit der die vorstehend erwähnten Nachteile vermieden werden und eine effektive Trennung von Bearbeitungsrückständen bei einfacher Bedienung geschaffen wird.

Diese Aufgabe wird gelöst mit einer Absaugvorrichtung gemäß den Merkmalen des Anspruchs 1.

Durch die vorgeschlagene Ausführung der Absaugvorrichtung mit wenigstens zwei umschaltbaren Filtereinheiten, die für unterschiedliche Materialien, wie Gips und Edelmetall, ausgelegt sind, wird erreicht, daß die Absauganlage mit Trennung unterschiedlicher Materialien arbeitet und an jedem Arbeitsplatz diverse Materialien bearbeitet werden können.

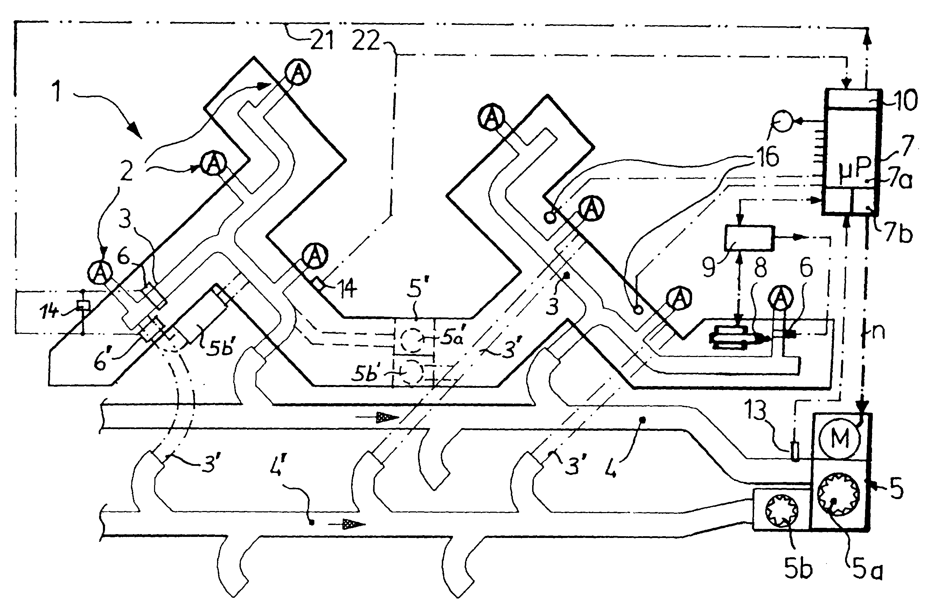

Weitere vorteilhafte Ausgestaltungen sind Gegenstand der abhängigen Ansprüche. Nachfolgend wird anhand der Zeichnung ein Ausführungsbeispiel der Absaugvorrichtung, wie sie für Dentallabor-Arbeitsplätze verwendet werden kann, näher beschrieben und erläutert.

In der Zeichnung ist schematisch eine Zentral-Absaugvorrichtung 1 dargestellt, wobei eine Vielzahl von Absaugstellen 2 an den hier acht angedeuteten Arbeitsplätzen A vorgesehen ist. Die im allgemeinen trichterförmige Absaugstelle 2 ist über eine verschließbare Absaugleitung 3 an ein Zentralabsaugrohr 4 angeschlossen, das in eine schematisch dargestellte, zentrale Absauganlage 5 mit einem entsprechend der erforderlichen Absaugleistung drehzahlveränderbaren Antriebsmotor M einmündet. Diese (zentrale) Absauganlage 5 weist bevorzugt zwei (oder mehr) Filtereinheiten 5a und 5b und ein vom Antriebsmotor M angetriebenes Absauggebläse (Turbine) auf, mit dem der an der Absaugstelle 2 entstehende Staub über die Absaugleitung 3, wenn sich diese in Durchlaßstellung befindet, und über das Zentralabsaugrohr 4 angesaugt wird.

Die Absauganlage 5 mit dem Antriebsmotor M für das nicht näher dargestellte Absauggebläse ist über eine mit dem Buchstaben "n" bezeichnete Steuerleitung mit einem Elektronik-Steuerteil 7 verbunden, wodurch dieses die Drehzahl des Antriebsmotors M je nach gewünschter Absaugleistung und Anzahl der geöffneten Absaugstellen 2 ansteuert. Das Elektronik-Steuerteil 7, das in Nähe der Absauganlage 5 oder in dieser angeordnet ist, weist hierbei eine Drehzahlsteuerung 7a auf, die durch das Kurzzeichen für einen Mikroprozessor gekennzeichnet ist, da ein derartiger, dem Fachmann auf dem Gebiet der Steuerungstechnik bekannter Mikroprozessor verwendet wird. Als Eingangsgrößen dienen dabei insbesondere die Anzahl der geöffneten Absaugstellen 2 bzw. über einen Unterdrucksensor 13 die damit verbundene Unterdruckänderung in dem Rohrleitungsnetz 3, 4, so daß bei größerer Anzahl der geöffneten Absaugstellen 2 auch entsprechend die Drehzahl des Antriebsmotors M gesteigert wird. Der Drehzahlsteuerung 7a des Elektronik-Steuerteils 7 ist dabei ein Ausgangsteil 7b zugeordnet, mit dem die entsprechenden Ansteuerbefehle zur Drehzahl-Änderung an den Antriebsmotor M, beispielsweise durch Pulsweitenmodulation abgegeben werden. Dem Elektronik-Steuerteil 7 ist des weiteren eine (bevorzugt elektronische oder elektromechanische) Schalteinrichtung 10 zugeordnet, die zur Umschaltung der Absaugwege entweder zu der Filtereinheit 5a oder zu der Filtereinheit 5b dient, um die Materialtrennung durchführen zu können.

In die Absaugleitung 3 ist bei jeder Absaugstelle 2 ein Schaltventil 6 eingebaut, das sich in nicht-betätigter Position in Schließstellung befindet und damit die Absaugleitung 3 verschließt, also die jeweilige Absaugstelle 2 von dem Unterdruck in dem Zentralabsaugrohr 4 trennt. Das Schaltventil 6, das hier der Übersichtlichkeit halber nur an dem hier jeweils rechten und linken Arbeitsplatz A dargestellt ist, wird zudem von einem Schalt-Steuerteil 9 angesteuert, wobei die Beaufschlagung bzw. Öffnung des Schaltventils 6 bevorzugt pneumatisch erfolgt. Hierdurch wird das Schaltventil 6 in seiner Grundstellung geschlossen und damit die Absaugleitung 3 verschlossen. Derartige Preßluft-Versorgungen sind im Versorgungsnetz eines Dentallabors im allgemeinen vorhanden, so daS sich dieses Medium zum Betätigen des Schaltventils 6 anbietet. Jedoch könnte auch eine mechanische, hydraulische oder elektromechanische Betätigung des Schaltventils 6 zur Umschaltung bzw. Bereitschaftschaltung vorgesehen sein, wie weiter unten beschrieben.

An das Schalt-Steuerteil 9 ist pro Arbeitsplatz A weiterhin ein in Strichpunktlinien angedeutetes Bearbeitungsgerät 8 und über die Schalteinrichtung 10 ein zweites Schaltventil 6' angeschlossen. Dieses Bearbeitungsgerät 8 ist beispielsweise als Schleif-Handstück ausgelegt, das durch einen nicht näher dargestellten Knieschalter betätigt wird. Bei der Bearbeitung von Dental-Werkstücken wird in das Schleif-Handstück ein Fräser oder ein Schleifstein eingesetzt und damit das Werkstück über der Absaugstelle 2 bearbeitet. Bei Betrieb des Bearbeitungsgerätes 8, beispielsweise durch Schalten des Knieschalters, erhält das jeweilige Schalt-Steuerteil 9 (und bei zentraler Auslegung auch die Schalteinrichtung 10 über das Steuerteil 7) einen entsprechenden Impuls, so daß die Schaltstellungen der Schaltventile 6 und 6' geändert werden, z. B. die Absaugleitung 3 zur Filtereinheit 5a in Durchlaßstellung geschaltet wird, während der Absaugweg 3' zur Filtereinheit 5b gesperrt wird. Es sei darauf hingewiesen, daß als Bearbeitungsgerät 8 verschiedene Geräte vorgesehen sein können, beispielsweise auch ein Sandstrahlgerät oder Gipsschleifband.

Wie im unteren Teil der Zeichnung angedeutet ist, ist neben dem in Art einer Ringleitung ausgeführten Zentralabsaugrohr 4 ein zweites (und ggf. drittes) Absaugrohr 4' vorgesehen, in das die strichpunktiert gezeichneten Absaugleitungen 3', die zu der jeweiligen Absaugstelle 2 an den Arbeitsplätzen A führen, angeschlossen sind. Selbstverständlich können dabei auch mehrere zugeordnete Absaugstellen 2 an einem Arbeitsplatz A, beispielsweise eine Absaugstelle im Auftischbereich und eine Absaugstelle in Vortisch-Position vorgesehen sein. Somit liegt ein Zweikreis-(oder Mehrkreis-)Absaugsystem vor, wobei in die Filtereinheit 5a z. B. nur Gips und in die Filtereinheit 5b z. B. nur Edelmetallstäube abgesaugt werden. Bei Bedarf kann durch weitere separate Absaugpfade mit Filtereinheiten 5c, 5d etc. eine Trennung von Keramik, Kunststoffen usw. vorgenommen werden.

Die Zentralabsaugrohre 4 und 4' münden getrennt voneinander einerseits in die (Gips-)Filtereinheit 5a und andererseits in die (Edelmetall-)Filtereinheit 5b. Die Umschaltung zwischen Zentralabsaugrohr 4 bzw. 4' kann alternativ zur zentralen Schaltung durch einen an der Absaugstelle 2 vorgesehenen manuellen Schalter 14 erfolgen, der über eine strichpunktierte Leitung 22 mit der Schalteinrichtung 10 verbunden ist. Der Schalter 14 kann zur Fernbetätigung auch in die Steuerleitung 21 von der Schalteinrichtung 10 eingesetzt sein, die damit die wechselweise Umschaltung zwischen den Schaltventilen 6 und 6' vornimmt. Es sei jedoch darauf hingewiesen, daß die Schalteinrichtung 10 auch durch Umstecken des Absaugtrichters von der Absaugleitung 3 zur 3' bzw. umgekehrt aktiviert werden kann, so daß auf den Schalter 14 verzichtet werden kann. Ebenso kann die Umschaltung zwischen den zwei Absaugpfaden 3 und 3' durch Umlegen einer Schwenkklappe erfolgen. Durch das Aktivieren der Schalteinrichtung 10 z. B. zugleich mit der Inbetriebnahme einer Absaugstelle wird somit ein Umschalten der Absauganlage 5 von der einen zur anderen Filtereinheit 5a bzw. 5b erreicht. Hierdurch kann die Zusatz-Absaugstelle bevorzugt zur Absaugung von Edelmetallen eingesetzt werden, wobei die Filtereinheit 5b auch als Vorfilter 5b' an jedem Arbeitsplatz A in Bypass-Anordnung vorgesehen sein kann, wie dies am hier linken Arbeitsplatz angedeutet ist.

Beim Umschalten vom Staubfilter 5a auf den Edelmetall-Filter 5b wird zudem eine Anzeige- bzw. Warneinrichtung 16 von der Steuereinrichtung 10 oder dem Schalter 14 direkt am Arbeitstisch betätigt, so daß von dem Zahntechniker erkannt wird, daß z. B. der Gips-Staubfilter 5a außer Betrieb ist und in die Edelmetall-Filtereinheit 5b abgesaugt wird. Die Warneinrichtung 16 ist in Form einer akustischen oder optischen Anzeige ausgebildet, so daß unzulässige Betriebsbedingungen der (Zentral-) Absaugvorrichtung 1 unterbunden werden. Diese kann dabei auch als sog. Minizentrale ausgebildet sein, wie in der Bildmitte mit dem Bezugszeichen 5' angedeutet. Die Absauganlage 5' mit den entsprechenden Filtereinheiten 5a' und 5b' ist hierbei als Schrank- oder Untertischgerät in Nähe der Arbeitsplätze angeordnet, so daß der Verrohrungsaufwand reduziert wird.

## Patentansprüche

1. Absaugvorrichtung, insbesondere für Dental-Arbeitsplätze, wobei wenigstens eine Absaugstelle (2) an staubbelasteten Arbeitsplätzen (A) über je eine verschließbare Absaugleitung (3) an eine Absauganlage (5) angeschlossen ist,
dadurch gekennzeichnet, daß
für unterschiedliche, vom Arbeitsplatz (A) abzusaugende Materialien wenigstens zwei Filtereinheiten (5a und 5b) vorgesehen sind, an die die Absaugstelle (2) mit getrennten Absaugleitungen (3, 3') wechselweise ankoppelbar ist.

2. Absaugvorrichtung nach Anspruch 1,
dadurch gekennzeichnet, daß
in der Absaugleitung (3, 3') zwei Schaltventile (6, 6') angeordnet sind, die von einer Schalteinrichtung (10, 14) wechselweise betätigbar und gegeneinander verriegelbar sind.

3. Absaugvorrichtung nach Anspruch 2,
dadurch gekennzeichnet, daß
die Schalteinrichtung (10) mit einem Schalt-Steuerteil (9) für ein Bearbeitungswerkzeug (8) gekoppelt ist.

4. Absaugvorrichtung nach einem der Ansprüche 1 bis 3,
dadurch gekennzeichnet, daß
die Absauganlage (5) als Zentral-Absauganlage mit wenigstens zwei Zentral-Absaugrohren (4, 4') ausgebildet ist.

5. Absaugvorrichtung nach Anspruch 4,
dadurch gekennzeichnet, daß
in der Absauganlage (5) ein einziger Antriebsmotor (M) vorgesehen ist.

6. Absaugvorrichtung nach einem Ansprüche 1 bis 5,
dadurch gekennzeichnet, daß
die Filtereinheit (5b) jeweils als einzelner Vorfilter (5b') an dem Arbeitsplatz (A) angeordnet ist.

7. Absaugvorrichtung nach einem der Ansprüche 1 bis 5,
dadurch gekennzeichnet, daß
die Filtereinheit (5b) zentral für alle oder mehrere Arbeitsplätze (A) angeordnet ist.

8. Absaugvorrichtung nach Anspruch 7,
dadurch gekennzeichnet, daß
die Filtereinheit (5b) zusammen mit der Filtereinheit (5a) an einem gemeinsamen Wechsel-Gestell angeordnet ist und die Filtereinheiten (5a, 5b) parallel verlaufende Ankuppelstutzen an die Absaugleitungen (3, 3') aufweisen.

9. Absaugvorrichtung nach einem der Ansprüche 1 bis 8,
dadurch gekennzeichnet, daß
die Filtereinheit (5b) zum Absaugen von Edelmetall, insbesondere Gold ausgebildet ist und bei Ankoppelung der Absaugstelle (2) an die Edelmetall-Filtereinheit (5b) eine Anzeige- und/oder Warneinrichtung (16) betätigbar ist.

10. Absaugvorrichtung nach einem der Ansprüche 1 bis 9,
dadurch gekennzeichnet, daß
die Absaugleitung (3) als Zweiweg-Leitung mit einem Doppelprofilrohr einerseits zur Filtereinheit (5a) und andererseits zur Filtereinheit (5b) ausgebildet ist.
